# FASCICULE DE BREVET EUROPEEN

(11) **EP 3 945 808 B1**
(45) Date de publication et mention de la délivrance du brevet: **29.03.2023**
(21) Numéro de dépôt: 20727314.5
(22) Date de dépôt: 26.05.2020
(51) Int. Cl.: A01M 7/00

(54) **ENSEMBLE RECUPERATEUR POUR SYSTEME DE PULVERISATION AGRICOLE ET SYSTEME DE PULVERISATION AGRICOLE ASSOCIE**
RÜCKGEWINNUNGSSYSTEM FÜR LANDWIRTSCHAFTLICHE SPRITZE, ENTSPRECHENDE LANDWIRTSCHAFTLICHE SPRITZE
RECUPERATOR FOR AGRICULTURAL SPRAYER AND CORRESPONDING AGRICULTURAL SPRAYER SYSTEM

(30) Priorité: 28.05.2019 FR 1905676
(43) Date de publication de la demande: 09.02.2022
(73) Titulaire: Exel Industries, 51200 Epernay (FR)
(72) Inventeur: MONCHANIN, Raphaël, 75009 PARIS (FR); PITAUD, Sylvain, 75009 PARIS (FR)
(74) Mandataire: Argyma
(86) Numéro de dépôt international: PCT/EP2020/064572
(87) Numéro de publication internationale: WO 2020/239763

(56) Documents cités:
- EP-A1- 0 580 247
- FR-A1- 2 501 461
- FR-A1- 2 598 941
- FR-A1- 3 057 737
- US-A- 1 416 065

## Description

### DOMAINE TECHNIQUE

L'invention concerne un ensemble récupérateur pour un système de pulvérisation agricole, ainsi qu'un système de pulvérisation agricole comprenant un tel ensemble récupérateur.

### ÉTAT DE LA TECHNIQUE ANTÉRIEURE

De manière connue, par exemple de FR 2 598 941 A1, un système de pulvérisation agricole, notamment viticole ou encore arboricole, comprend un circuit d'alimentation reliant une cuve de liquide de traitement, tel que du produit phytosanitaire ou de l'engrais liquide, à un dispositif de pulvérisation par l'intermédiaire d'une pompe qui aspire le liquide de traitement de la cuve pour alimenter le dispositif de pulvérisation qui porte des buses conçues pour pulvériser le liquide de traitement aspiré par la pompe sur des végétaux à traiter d'un champ.

Le système de pulvérisation agricole comprend encore un ensemble récupérateur prévu pour récupérer le liquide de traitement pulvérisé sur les végétaux à traiter qui est en surplus.

Pour cela, les végétaux à traiter sont par exemple interposés entre les buses du dispositif de pulvérisation et un panneau récupérateur de l'ensemble récupérateur qui fait face aux buses et qui est conçu pour capter le liquide de traitement pulvérisé en surplus. Le liquide de traitement ainsi capté, alors sous forme de gouttelettes, coule par gravité le long du panneau récupérateur jusqu'à un bac récupérateur.

Afin d'éviter que ce bac récupérateur ne se remplisse de liquide de traitement et ne déborde, mais aussi pour des raisons économiques et environnementales, l'ensemble récupérateur comprend un circuit de retour qui retourne le liquide de traitement ainsi récupéré vers la cuve au moyen d'une pompe.

Or, lorsqu'il n'y a que peu de liquide de traitement récupéré dans le bac récupérateur, l'orifice du bac récupérateur par l'intermédiaire duquel la pompe aspire le liquide de traitement peut ne pas être totalement immergé ou bien même être situé au-dessus du niveau de liquide de traitement dans le bac récupérateur. La pompe aspire alors de l'air en plus du liquide de traitement, l'air étant en outre plus facilement aspiré par la pompe que le liquide de traitement.

Au démarrage, cela rend l'amorçage de la pompe difficile voire même impossible à réaliser. Le circuit de retour peut donc ne pas fonctionner.

De plus, dans de telles conditions, même si l'amorçage de la pompe est un succès, le circuit de retour renvoie vers la cuve un mélange d'air et de liquide de traitement qui forme une mousse risquant de faire déborder la cuve. Cette mousse complique en outre la vidange de la cuve, ainsi que son rinçage.

En fonctionnement, la pompe peut se désamorcer et son réamorçage pose alors les mêmes difficultés qu'au démarrage. Le circuit de retour peut donc arrêter de fonctionner sans pouvoir redémarrer.

### EXPOSÉ DE L'INVENTION

La présente invention a pour but de pallier un ou plusieurs des inconvénients mentionnés ci-dessus, notamment en proposant un ensemble récupérateur pour système de pulvérisation agricole comprenant un bac récupérateur, un mécanisme générateur de débit et un circuit de dérivation conçu pour renvoyer du liquide de traitement depuis l'aval du mécanisme générateur de débit vers le bac récupérateur, de sorte à provoquer une circulation continue de liquide de traitement à travers le mécanisme générateur de débit.

Plus précisément, l'invention a pour objet un ensemble récupérateur pour un système de pulvérisation agricole comprenant une cuve destiné à contenir un liquide de traitement et au moins un dispositif de pulvérisation destiné à pulvériser du liquide de traitement provenant de la cuve sur des végétaux à traiter dans un champ, l'ensemble récupérateur comprenant :
- un bac récupérateur destiné à récupérer du liquide de traitement pulvérisé en surplus par le dispositif de pulvérisation sur les végétaux à traiter,
- un mécanisme générateur de débit comprenant un orifice d'aspiration communiquant avec le bac récupérateur via un circuit d'aspiration et un orifice de refoulement destiné à communiquer avec la cuve via un circuit de refoulement, le mécanisme générateur de débit étant en outre conçu pour aspirer le liquide de traitement récupéré par le bac récupérateur et pour le refouler vers le circuit de refoulement,
- un premier circuit de dérivation communiquant d'une part avec l'orifice de refoulement du mécanisme générateur de débit via le circuit de refoulement et d'autre part avec le bac récupérateur, le premier circuit de dérivation étant en outre conçu pour renvoyer du liquide de traitement provenant du mécanisme générateur de débit vers le bac récupérateur, de manière à provoquer une circulation continue de liquide de traitement à travers le mécanisme générateur de débit.

Selon des variantes de réalisation qui peuvent être prises ensemble ou séparément :
- le premier circuit de dérivation est connecté au circuit de refoulement au niveau d'un noeud ;
- le premier circuit de dérivation comprend un limiteur de débit conçu pour limiter le débit de liquide de traitement circulant dans le premier circuit de dérivation par rapport à celui circulant dans le circuit de refoulement, en aval du noeud ;
- le premier circuit de dérivation est au moins en partie sous-dimensionné en section par rapport au circuit de refoulement, en aval du noeud ;
- le limiteur de débit est choisi parmi : une restriction calibrée, un limiteur de débit à pointeau ou une pastille à trou calibré ;
- le premier circuit de dérivation est conçu pour évacuer de l'air aspiré par le mécanisme générateur de débit avec le liquide de traitement récupéré dans le bac récupérateur ;
- le premier circuit de dérivation comprend un orifice de dégazage, notamment situé en aval du limiteur de débit, afin d'évacuer l'air aspiré par le mécanisme générateur de débit ;
- le circuit de refoulement comprend un clapet anti-retour situé en aval du noeud au niveau duquel le premier circuit de dérivation est connecté au circuit de refoulement ;
- le clapet anti-retour est conçu pour :
   ∘ autoriser la circulation du liquide de traitement dans le circuit de refoulement, depuis le mécanisme générateur de débit vers la cuve, lorsqu'une pression du fluide dans le circuit de refoulement, en aval du noeud et en amont du clapet anti-retour, est supérieure à une pression seuil qui est au moins égale à une pression du fluide dans le circuit de refoulement, en aval du clapet anti-retour, et
   ∘ bloquer la circulation du liquide de traitement dans le circuit de refoulement, lorsque la pression du fluide dans le circuit de refoulement en aval du noeud et en amont du clapet anti-retour, est inférieure ou égale à la pression seuil ;
- le circuit de refoulement comprend une première conduite s'étendant depuis l'orifice de refoulement de le mécanisme générateur de débit jusqu'au noeud au niveau duquel le premier circuit de dérivation est connecté au circuit de refoulement, et une deuxième conduite s'étendant depuis le noeud vers la cuve ;
- la deuxième conduite du circuit de refoulement comprend une première portion de conduite et une deuxième portion de conduite connectée au noeud et à la première portion de conduite ;
- la première portion conduite de la deuxième conduite du circuit de refoulement s'étend, d'amont en aval dans le sens de circulation du liquide de traitement, sensiblement verticalement vers le haut ;
- la première portion conduite de la deuxième conduite du circuit de refoulement est équipée du clapet anti-retour qui est agencé plus vers le bas que vers le haut sur la première portion de conduite ;
- le premier circuit de dérivation comprend une première conduite s'étendant sensiblement verticalement vers le haut depuis le circuit de refoulement, le cas échéant équipé du limiteur de débit, et une deuxième conduite prolongeant la première conduite vers le bac récupérateur ;
- la deuxième portion de conduite de la deuxième conduite du circuit de refoulement s'étend depuis le noeud sensiblement verticalement ou de manière inclinée vers le bas ;
- l'ensemble récupérateur comprend un débitmètre monté sur le circuit de refoulement, en aval du noeud au niveau duquel le premier circuit de dérivation est connecté au circuit de refoulement et le cas échéant en aval du clapet anti-retour, et conçu pour mesurer un débit de fluide entrant dans la cuve.

L'invention a aussi pour objet un système de pulvérisation agricole comprenant une cuve destiné à contenir un liquide de traitement, au moins un dispositif de pulvérisation conçu pour pulvériser du liquide de traitement provenant de la cuve sur des végétaux à traiter dans un champ et au moins un ensemble récupérateur tel que précédemment décrit.

L'ensemble récupérateur comprend par exemple un débitmètre qui est monté sur le circuit de refoulement, en aval d'un noeud au niveau duquel le premier circuit de dérivation est connecté au circuit de refoulement et le cas échéant en aval du clapet anti-retour, et qui est conçu pour mesurer un débit de fluide entrant dans la cuve. Le système de pulvérisation agricole comprend par exemple une unité de commande reliée au débitmètre et conçue pour déterminer, à partir du débit mesuré par le débitmètre de fluide entrant dans la cuve, une autonomie du système de pulvérisation agricole à un instant t.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

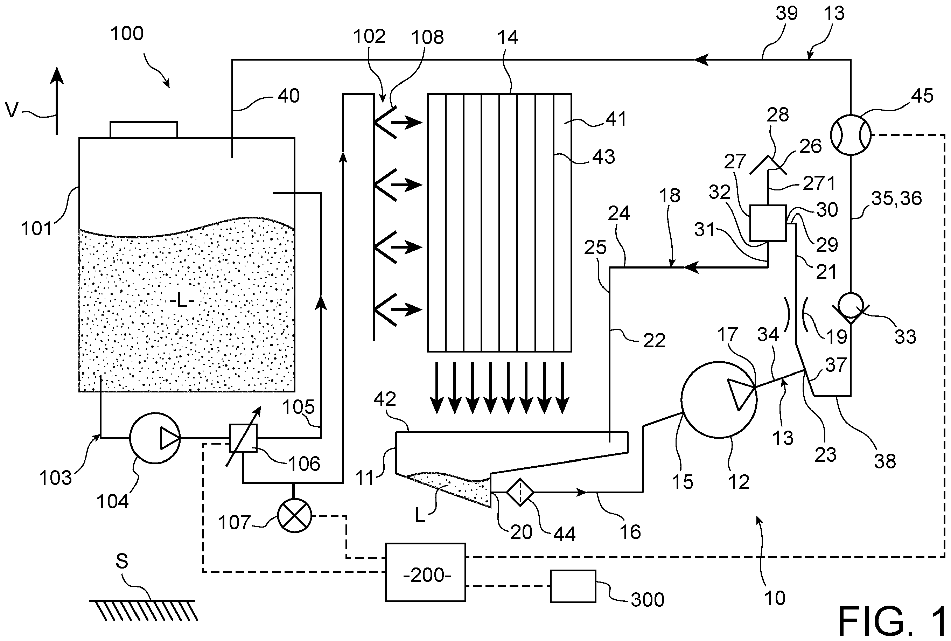

- la figure 1 est une vue schématique d'un système de pulvérisation agricole comprenant un ensemble récupérateur selon un mode de réalisation de l'invention.

### DESCRIPTION DETAILLEE

A titre préliminaire, il est adopté à titre non limitatif un repère global comportant un plan horizontal, sensiblement parallèle à une surface d'un sol S et une direction verticale V, orientée de bas en haut.

La figure 1 montre un système de pulvérisation agricole 100 comprenant une cuve 101 destinée à contenir un liquide de traitement L, notamment un produit phytosanitaire ou un engrais liquide, au moins un dispositif de pulvérisation 102 conçu pour pulvériser du liquide de traitement L provenant de la cuve 101 sur des végétaux à traiter dans un champ et au moins un ensemble récupérateur 10 selon un mode de réalisation de l'invention.

Il est entendu par « liquide » que le produit contenu dans la cuve 101 comprend une phase liquide. Il présente par exemple la forme d'une solution ou encore d'une suspension.

Le système de pulvérisation agricole 100 est en contact avec le sol S, notamment via des roues permettant son déplacement.

Le système de pulvérisation agricole 100 est par exemple destiné à être tracté par un engin agricole, tel qu'un tracteur. En variante, le système de pulvérisation agricole 100 est destiné à être porté par l'engin agricole. Encore en variante, le système de pulvérisation agricole 100 est automoteur et forme donc l'engin agricole.

L'ensemble récupérateur 10 comprend un bac récupérateur 11, un mécanisme générateur de débit 12, notamment une première pompe, et un circuit de refoulement 13.

Le bac récupérateur 11 est destiné à récupérer du liquide de traitement L pulvérisé en surplus par le dispositif de pulvérisation 102 sur les végétaux à traiter, notamment par gravité au moyen d'un panneau récupérateur 14 comme cela sera expliqué plus en détail dans la suite de la description.

La première pompe 12 comprend un orifice d'aspiration 15 communiquant avec le bac récupérateur 11 via un circuit d'aspiration 16, le circuit d'aspiration 16 reliant ainsi le bac récupérateur 11 à la première pompe 12, notamment à son orifice d'aspiration 15.

La première pompe 12 comprend aussi un orifice de refoulement 17 communiquant avec la cuve 101 via le circuit de refoulement 13, le circuit de refoulement 13 reliant ainsi la première pompe 12, notamment son orifice de refoulement 17, à la cuve 101.

La première pompe 12 est en outre conçue pour aspirer le liquide de traitement L récupéré par le bac récupérateur 11 et pour le refouler vers le circuit de refoulement 13. Le bac récupérateur 11 et le circuit d'aspiration 16 sont ainsi montés en amont de la première pompe 12, tandis que le circuit de refoulement 13 et la cuve 101 sont montés en aval de la première pompe 12.

Dans la suite de description, les termes « amont » et « aval » tiennent compte du sens de circulation des fluides, notamment du liquide de traitement L, dans le système de pulvérisation agricole 100.

La première pompe 12 est par exemple montée « en aspiration », son orifice d'aspiration 15 étant situé au-dessus du niveau de liquide de traitement L récupéré dans le bac récupérateur 11.

Selon l'invention, l'ensemble récupérateur 10 comprend encore un premier circuit de dérivation 18 communiquant d'une part avec l'orifice de refoulement 17 de la première pompe 12 via le circuit de refoulement 13 et d'autre part avec le bac récupérateur 11. Le premier circuit de dérivation 18 est connecté au circuit de refoulement 13 au niveau d'un noeud 23. Le premier circuit de dérivation 18 est en outre conçu pour renvoyer du liquide de traitement L provenant de la première pompe 12 vers le bac récupérateur 11.

De cette manière, le premier circuit de dérivation 18 prélève du liquide de traitement L en aval de la première pompe 12 pour le renvoyer vers le bac récupérateur 11, en amont de la première pompe 12. Ainsi, du liquide de traitement L circule en continue à travers la première pompe 12. Autrement dit, le premier circuit de dérivation 18 permet de s'assurer qu'il y ait toujours du liquide de traitement L à aspirer par la première pompe 12 dans le bac récupérateur 11. Cela facilite l'amorçage de la première pompe 12 et évite son désamorçage, lorsqu'il n'y pas suffisamment de liquide de traitement L dans le bac récupérateur 11 pour que l'orifice de sortie 20 du bac récupérateur 11 soit totalement immergé.

Le premier circuit de dérivation 18 comprend par exemple un limiteur de débit 19 conçu pour limiter le débit de liquide de traitement L circulant dans le premier circuit de dérivation 18 par rapport à celui circulant dans le circuit de refoulement 13, en aval du noeud 23. Cela permet d'éviter que le premier circuit de dérivation 18 prélève trop de liquide de traitement L, au détriment du retour de liquide de traitement L vers la cuve 101.

Le limiteur de débit 19 peut être choisi parmi : une restriction calibrée, un limiteur de débit à pointeau ou une pastille à trou calibré. Le calibrage de la restriction ou de la pastille est par exemple déterminé de manière empirique ou par calculs. Le limiteur de débit à pointeau est par exemple piloté par une unité de commande 200 du système de pulvérisation agricole 100, qui sera décrite plus en détail dans la suite de la description, permettant ainsi de régler son calibrage.

En variante (non représentée), le premier circuit de dérivation 18 est au moins en partie sous-dimensionné en section par rapport au circuit de refoulement 13, en aval du noeud 23. Il est entendu par « sous-dimensionné en section » que la section transversale de la, d'une 21 des ou des conduites du premier circuit de dérivation 18 présente des dimensions inférieures à la section transversale de la ou des conduites 34, 35 du circuit de refoulement 13, en aval du noeud 23.

Le premier circuit de dérivation 18 comprend par exemple une première conduite 21 s'étendant sensiblement verticalement vers le haut depuis le circuit de refoulement 13, le cas échéant équipé du limiteur de débit 19, et une deuxième conduite 22 prolongeant la première conduite 21 vers le bac récupérateur 11. La première conduite 21 du premier circuit de dérivation 18 est connectée au circuit de refoulement 13 au niveau du noeud 23.

La deuxième conduite 22 du premier circuit de dérivation 18 comprend par exemple une première portion de conduite 24 s'étendant sensiblement horizontalement dans le prolongement de la première conduite 21, notamment jusqu'à être située au-dessus du bac récupérateur 11, et une deuxième portion de conduite 25 s'étendant sensiblement verticalement vers le bas dans le prolongement de la première portion de conduite 24 jusqu'au bac récupérateur 11.

Le premier circuit de dérivation 18 est par exemple aussi conçu pour évacuer de l'air aspiré par la première pompe 12 avec le liquide de traitement L récupéré dans le bac récupérateur 11. De l'air est par exemple aspiré par la première pompe 12 en même temps que le liquide de traitement L, lorsqu'un orifice de sortie 20 du bac récupérateur 11, auquel est connecté le circuit d'aspiration 16 et donc la première pompe 12, n'est pas complètement immergé dans le liquide de traitement L récupéré dans le bac récupérateur 11 ou même lorsque cet orifice de sortie 20 est situé au-dessus du niveau de liquide de traitement L récupéré dans le bac récupérateur 11.

De cette manière, l'air aspiré par la première pompe 12 est au moins en partie évacué par le premier circuit de dérivation 18 avant d'alimenter la cuve 101. Cela permet de limiter la formation de mousse dans la cuve 101, ce qui peut provoquer son débordement et/ou ce qui gêne sa vidange et son rinçage.

Pour cela, le premier circuit de dérivation 18 comprend par exemple un orifice de dégazage 26, aussi appelé évent, notamment situé en aval du limiteur de débit 19, afin d'évacuer l'air aspiré par la première pompe 12. L'orifice de dégazage 26 s'étend par exemple autour d'un axe sensiblement vertical.

Les première et deuxième conduites 21, 22 du premier circuit de dérivation 18 sont par exemple connectées l'une à l'autre par l'intermédiaire d'une chambre 27 elle-même connectée à l'orifice de dégazage 26.

L'orifice de dégazage 26 peut être connecté à la chambre 27 au moyen d'une troisième conduite 271 du premier circuit de dérivation 18 s'étendant sensiblement verticalement vers le haut depuis la chambre 27 jusqu'à une extrémité libre dans laquelle l'orifice de dégazage 26 est formé. Cela favorise l'évacuation d'air plutôt que de liquide de traitement L à travers l'orifice de dégazage 26.

En variante (non représentée), l'orifice de dégazage 26 peut être ménagé dans une extrémité supérieure de la chambre 27, de sorte à favoriser l'évacuation d'air plutôt que de liquide de traitement L à travers l'orifice de dégazage 26.

Encore en variante (non représentée), la troisième conduite 271 du premier circuit de dérivation 18 s'étend verticalement vers le haut directement depuis la deuxième conduite 22 ou depuis une intersection entre les première et deuxième conduites 21, 22 du premier circuit de dérivation 18.

Lorsque le premier circuit de dérivation 18 est sous-dimensionné en section par rapport au circuit de refoulement 13, en aval du noeud 23, c'est par exemple la section transversale de la première conduite 21 du premier circuit de dérivation 18 qui présente des dimensions inférieures à la section transversale de la ou des conduites 34, 35 du circuit de refoulement 13, en aval du noeud 23. Cela permet de s'assurer que le liquide de traitement L retourne vers le bac récupérateur 11 via la deuxième conduite 22 plutôt que de s'échapper par l'orifice de dégazage 26 via la troisième conduite 271.

L'orifice de dégazage 26 s'étend par exemple autour d'un axe sensiblement vertical.

L'orifice de dégazage 26 peut encore être coiffé par un chapeau 28 situé verticalement à distance et en regard de l'orifice de dégazage 26, de sorte à bloquer d'éventuelles projections de liquide de traitement L à travers l'orifice de dégazage 26. Le chapeau 28 permet aussi d'éviter que des éléments extérieurs, qui peuvent aussi bien être solides que liquides, tels que de de l'eau de pluie, du produit phytosanitaire ou de la boue, ne viennent boucher le circuit de dérivation 18, ou même le système de pulvérisation 100, en s'introduisant à l'intérieur du circuit de dérivation 18 via l'orifice de dégazage 26.

L'orifice de dégazage 26 est situé à une hauteur ou distance verticale, par rapport au noeud 23, définie telle que le liquide de traitement L circulant dans le premier circuit de dérivation 18 retourne au bac récupérateur 11, sans s'échapper par l'orifice de dégazage 26. Cette hauteur peut aussi bien être définie de manière empirique que par calculs.

Autrement dit, la troisième conduite 271 du premier circuit de dérivation 18 présente par exemple une hauteur ou distance entre ses deux extrémités supérieure et inférieure, suffisante pour qu'il n'y ait pas de liquide de traitement L au niveau de l'orifice de dégazage 26.

Le premier circuit de dérivation 18 comprend par exemple encore une conduite d'entrée 29 connectée d'une part à un orifice d'entrée 30 de la chambre 27 et d'autre part à la première conduite 21, ainsi qu'une conduite de sortie 31 connectée d'une part à un orifice de sortie 32 de la chambre 27 et d'autre part à la deuxième conduite 22 du premier circuit de dérivation 18.

L'orifice d'entrée 30 de la chambre 27 est par exemple situé au-dessus de son orifice de sortie 32. Cela permet de favoriser la séparation entre le liquide de traitement L et l'air pénétrant dans la chambre 27, l'air se dirigeant plutôt vers le haut en direction de l'orifice de dégazage 26 tandis que le liquide de traitement L se dirige, par gravité, plutôt vers le bas en direction de l'orifice de sortie 32 de la chambre 27 et donc en direction de le bac récupérateur 11.

La conduite d'entrée 29 du premier circuit de dérivation 18 peut être sensiblement horizontale. La conduite de sortie 31 peut être sensiblement verticale.

Le circuit de refoulement 13 comprend par exemple encore un clapet anti-retour 33 situé en aval du noeud 23 au niveau duquel le premier circuit de dérivation 18, notamment sa première conduite 21, est connecté au circuit de refoulement 13.

Le clapet anti-retour 33 est conçu pour :
- autoriser la circulation du liquide de traitement L dans le circuit de refoulement 13, depuis la première pompe 12 vers la cuve 101, lorsqu'une pression du fluide dans le circuit de refoulement 13, en aval du noeud 23 et en amont du clapet anti-retour 33, est supérieure à une pression seuil qui est au moins égale à une pression du fluide dans le circuit de refoulement 13, en aval du clapet anti-retour 33, et
- bloquer la circulation du liquide de traitement L dans le circuit de refoulement 13, lorsque la pression du fluide dans le circuit de refoulement 13, en aval du noeud 23 et en amont du clapet anti-retour 33, est inférieure ou égale à la pression seuil.

Le clapet anti-retour 33 n'autorise ainsi la circulation de liquide de traitement L que depuis la première pompe 12 vers la cuve 101 et empêche la circulation de liquide de traitement L depuis l'aval du clapet anti-retour 33 vers la première pompe 12. Cela permet d'éviter la vidange du circuit de refoulement 13 vers la première pompe 12, notamment en cas d'avarie de la première pompe 12.

Il est entendu par « fluide », le liquide de traitement L et le cas échéant l'air qui a été aspiré par la première pompe 12 et qui n'a pas pu être évacué via le premier circuit de dérivation 18.

Le clapet anti-retour 33 est par exemple conçu pour occuper une position de fermeture, lorsque la pression du fluide dans le circuit de refoulement 13, en aval du noeud 23 et en amont du clapet anti-retour 33, est inférieure ou égale à la pression seuil, et se déplacer vers une position d'ouverture, lorsque la pression du fluide dans le circuit de refoulement 13, en aval du noeud 23 et en amont du clapet anti-retour 33, est supérieure la pression seuil.

De cette manière, du liquide de traitement L s'accumule en aval du noeud 23 et en amont du clapet anti-retour 33, tandis que du liquide de traitement L recircule vers le bac récupérateur 11 via le premier circuit de dérivation 18, tant que le bac récupérateur 11 n'est pas suffisamment rempli de liquide de traitement L pour atteindre la pression seuil en amont du clapet anti-retour 33. Dès que la pression seuil est atteinte, le clapet anti-retour 33 autorise la circulation de liquide de traitement L à travers le clapet anti-retour 33 vers la cuve 101, notamment en se déplaçant vers sa position d'ouverture.

Le clapet anti-retour 33 peut aussi être équipé d'un organe de rappel élastique (non représenté), notamment d'un ressort, conçu pour rappeler élastiquement le clapet anti-retour 33 vers sa position de fermeture. La pression seuil tient alors compte à la fois de la pression du fluide dans le circuit de refoulement 13, en aval du clapet anti-retour 33, et de la pression nécessaire pour vaincre l'effort de rappel élastique appliqué par l'organe de rappel élastique sur le clapet anti-retour 33.

Le circuit de refoulement 13 comprend par exemple une première conduite 34 s'étendant depuis l'orifice de refoulement 17 de la première pompe 12 jusqu'au noeud 23, et une deuxième conduite 35 s'étendant depuis le noeud 23 vers la cuve 101.

La deuxième conduite 35 du circuit de refoulement 13 peut comprendre une première portion conduite 36 communiquant avec le noeud 23 et s'étendant, d'amont en aval, sensiblement verticalement vers le haut.

La deuxième conduite 35 du circuit de refoulement 13 peut encore comprendre une deuxième portion de conduite 37 s'étendant depuis le noeud 23 sensiblement verticalement ou de manière inclinée vers le bas.

De cette manière, en aval du noeud 23, le premier circuit de dérivation 18 est orienté vers le haut, tandis que le circuit de refoulement 13 est orienté vers le bas. Cela permet de favoriser la séparation entre le liquide de traitement L et l'air provenant de la première pompe 12, lorsqu'ils atteignent le noeud 23, l'air se dirigeant plutôt vers le haut dans le premier circuit de dérivation 18, notamment en direction de l'orifice de dégazage 26, tandis que le liquide de traitement L se dirige, par gravité, plutôt vers le bas dans le circuit de refoulement 13 en direction de la cuve 101. Moins d'air aspiré par la première pompe 12 peut ainsi venir alimenter la cuve 101, ce qui permet de limiter la formation de mousse dans la cuve 101.

La première portion de conduite 36 de la deuxième conduite 35 du circuit de refoulement 13 communique par exemple avec le noeud 23 via la deuxième portion de conduite 37 de ladite deuxième conduite 35. La première et la deuxième portions de conduite 36, 37 de la deuxième conduite 35 du circuit de refoulement 13 peuvent en outre être connectées l'une à l'autre par l'intermédiaire d'une troisième portion de conduite 38, s'étendant, par exemple sensiblement horizontalement, depuis la deuxième portion de conduite 37 jusqu'à la première portion de conduite 36.

Afin d'empêcher la vidange de la première portion de conduite 36 de la deuxième conduite 35 du circuit de refoulement 13 vers la première pompe 12, la première portion de conduite 36 est par exemple équipée du clapet anti-retour 33 qui est agencé plus vers le bas que vers le haut sur la première portion de conduite 36.

En variante (non représentée), le clapet anti-retour 33 équipe la deuxième conduite 35 du circuit de refoulement 13 en amont de sa première portion de conduite 36. Le clapet anti-retour 33 équipe par exemple la deuxième portion de conduite 37 ou la troisième portion de conduite 38 de la deuxième conduite 35 du circuit de refoulement 13. Le clapet anti-retour 33 empêche ainsi la vidange de la première portion de conduite 36 vers la première pompe 12.La deuxième conduite 35 du circuit de refoulement 13 comprend par exemple aussi une quatrième portion de conduite 39 s'étendant dans le prolongement de la première portion de conduite 36 jusqu'à la cuve 101 ou jusqu'à être située au-dessus de la cuve 101.

La deuxième conduite 35 du circuit de refoulement 13 peut encore comprendre une cinquième portion de conduite 40 s'étendant dans le prolongement de la quatrième portion de conduite 39 sensiblement verticalement vers le bas jusqu'à la cuve 101.

Comme indiqué précédemment, l'ensemble récupérateur 10 comprend par exemple un panneau récupérateur 14 conçu pour capter ou encore pour recueillir le liquide de traitement L pulvérisé en surplus sur les végétaux à traiter par le ou l'un des dispositifs de pulvérisation 102.

Pour cela, le panneau récupérateur 14 comprend par exemple une face 41, globalement verticale, agencée en regard et à distance du dispositif de pulvérisation 102. De cette manière, lorsque le dispositif de pulvérisation 102 pulvérise du liquide de traitement L sur les végétaux à traiter, qui sont interposés entre le dispositif de pulvérisation 102 et la face 41 du panneau récupérateur 14, le liquide de traitement L pulvérisé en surplus, c'est-à-dire qui n'est pas absorbé par les végétaux à traiter, les traverse jusqu'à être recueilli par la face 41 du panneau récupérateur 14, notamment sous forme de gouttelettes.

Le panneau récupérateur 14 est en outre verticalement aligné au-dessus d'une ouverture 42 du bac récupérateur 11 s'étendant autour d'un axe sensiblement vertical, de sorte que les gouttelettes de liquide de traitement L captées par le panneau récupérateur 14 coulent par gravité jusqu'au bac récupérateur 11.

Le panneau récupérateur 14 peut encore être pourvu d'une pluralité d'ailettes 43, sensiblement verticales et parallèles entre elles, s'étendant depuis la face 41 du panneau récupérateur 14 en direction du dispositif de pulvérisation 102. Les ailettes 43 guident ainsi les gouttelettes de liquide de traitement L recueillies par le panneau récupérateur 14 vers le bac récupérateur 11.

La première pompe 12 est par exemple inclinée vers le haut, depuis son orifice d'aspiration 15 en direction de son orifice de refoulement 17. Cela permet de dégazer au moins en partie l'air emprisonné dans la première pompe 12.

Un filtre 44 peut encore être prévu dans le circuit d'aspiration 16, afin d'éviter un encrassement de la première pompe 12.

L'ensemble récupérateur 10 comprend par exemple aussi un débitmètre 45 monté sur le circuit de refoulement 13, en aval du noeud 23 et le cas échéant en aval du clapet anti-retour 33, et conçu pour mesurer un débit de fluide entrant dans la cuve 101.

Le débitmètre 45 est en outre relié à l'unité de commande 200 du système de pulvérisation agricole 100 à laquelle il communique le débit mesuré de fluide entrant dans la cuve 101.

L'unité de commande 200 comprend par exemple une interface d'entrée à laquelle le débitmètre 45 est relié afin de communiquer le débit mesuré de fluide entrant dans la cuve 101, une interface de sortie à laquelle une interface utilisateur 300 est reliée, une mémoire de programmes, une mémoire de données et un microprocesseur. Un bus de communication peut encore être prévu pour relier les interfaces d'entrée et de sortie, la mémoire de programmes, la mémoire de données et le microprocesseur.

L'unité de commande 200 est par exemple conçue pour déterminer, à partir du débit mesuré par le débitmètre 45 de fluide entrant dans la cuve 101, une autonomie du système de pulvérisation agricole 100 à un instant t.

Il est entendu par « autonomie du système de pulvérisation agricole 100 à un instant t », la surface du champ de végétaux à traiter pouvant être pulvérisée par le système de pulvérisation agricole 100 à partir de la quantité de liquide de traitement L contenue dans la cuve 101 à l'instant t. Elle s'exprime par exemple en hectare. L'autonomie du système de pulvérisation agricole 100 à l'instant t dépend donc de la quantité de liquide de traitement L contenue dans la cuve 101 à l'instant t et du dosage de liquide de traitement L à pulvériser, c'est-à-dire de la quantité de liquide de traitement L à pulvériser par unité de surface.

Plus précisément, l'unité de commande 200 est conçue pour :
- déterminer, à partir d'un ou de débits mesurés ou calculés de liquide de traitement L sortant de la cuve 101 entre un instant initial t0 et un instant t postérieur, une quantité de liquide de traitement L sorti de la cuve 101 depuis l'instant initial t0 jusqu'à l'instant t, et, à partir du ou des débits mesurés par le débitmètre 45 de fluide entrant dans la cuve 101 entre l'instant initial t0 et l'instant t, une quantité de fluide entré dans la cuve 101 depuis l'instant initial t0 jusqu'à l'instant t,
- déterminer, à partir d'une quantité prédéfinie de liquide de traitement L contenue dans la cuve 101 à l'instant initial t0, de la quantité ainsi déterminée de liquide de traitement L sorti de la cuve 101 depuis l'instant initial t0 jusqu'à l'instant t et de la quantité ainsi déterminée de fluide entré dans la cuve 101 depuis l'instant initial t0 jusqu'à l'instant t, une quantité de liquide de traitement L contenue dans la cuve 101 à l'instant t,
- déterminer, à partir de la quantité ainsi déterminée de liquide de traitement L dans la cuve 101 à l'instant t et du dosage de liquide de traitement L à pulvériser, l'autonomie du système de pulvérisation agricole 100 à l'instant t,
- le cas échéant, afficher l'autonomie du système de pulvérisation agricole 100 à l'instant t ainsi déterminée sur l'interface utilisateur 300, afin d'en informer l'agriculteur.

La quantité de liquide de traitement L contenue dans la cuve 101 à l'instant initial t0 est par exemple enregistrée par l'agriculteur dans la mémoire de données de l'unité de commande 200 via l'interface utilisateur 300, cette quantité de liquide de traitement L pouvant alors correspondre à la quantité de liquide de traitement L versé par l'agriculteur dans la cuve 101.

Après détermination de la quantité de liquide de traitement L contenue dans la cuve 101 l'instant t, l'unité de commande 200 est par exemple conçue pour mettre à jour la quantité de liquide de traitement L contenue dans la cuve 101 à l'instant initial t0 en fonction de la quantité de liquide de traitement L contenue dans la cuve 101 à l'instant t.

Le dosage de liquide de traitement L à pulvériser est par exemple enregistré par l'agriculteur dans la mémoire de données de l'unité de commande 200 via l'interface utilisateur 300. Le dosage de liquide de traitement L à pulvériser dépend par exemple de la densité des végétaux à traiter dans le champ.

Ainsi, plus l'air aspiré par la première pompe 12 en même temps que le liquide de traitement L du bac récupérateur 11 est évacué via le premier circuit de dérivation 18, plus le débit de fluide entrant dans la cuve 101, qui est mesuré par le débitmètre 45, s'approche du débit de liquide de traitement L entrant dans la cuve 101, et donc plus la détermination de l'autonomie du système de pulvérisation agricole 100 à l'instant t est précise.

Le système de pulvérisation agricole 100 comprend par exemple encore un circuit d'alimentation 103 communiquant d'une part avec la cuve 101 et d'autre part avec le ou chacun des dispositifs de pulvérisation 102. Le circuit d'alimentation 103 permet ainsi d'alimenter le ou les dispositifs de pulvérisation 102 avec du liquide de traitement L provenant de la cuve 101.

Le circuit d'alimentation 103 est en outre équipé d'une deuxième pompe 104 conçue pour aspirer du liquide de traitement L provenant de la cuve 101 et pour refouler le liquide de traitement L aspiré vers le ou vers chaque dispositif de pulvérisation 102.

La deuxième pompe 104 est par exemple montée « en charge », un orifice d'aspiration de la deuxième pompe 104 étant situé en-dessous du niveau de liquide de traitement L contenu dans la cuve 101. En variante (non représentée), la deuxième pompe 104 est montée « en aspiration », un orifice d'aspiration de la deuxième pompe 104 étant situé au-dessus du niveau de liquide de traitement L contenu dans la cuve 101.

Le circuit d'alimentation 103 peut encore comprendre un deuxième circuit de dérivation 105 communiquant d'une part avec le circuit d'alimentation 103, en aval de la deuxième pompe 104, et d'autre part avec la cuve 101.

De cette manière, le deuxième circuit de dérivation 105 permet de renvoyer du liquide de traitement L aspiré par la deuxième pompe 104 vers la cuve 101, et ainsi de réguler la quantité de liquide de traitement L alimentant le ou les dispositifs de pulvérisation 102.

Le deuxième circuit de dérivation 105 communique par exemple avec le circuit d'alimentation 103 par l'intermédiaire d'une vanne de régulation 106 conçue pour réguler la quantité de liquide de traitement L alimentant le ou les dispositifs de pulvérisation 102, notamment en renvoyant du liquide de traitement L aspiré par la deuxième pompe 104 vers la cuve 101 via le deuxième circuit de dérivation 105. La vanne de régulation 106 est par exemple pilotée par l'unité de commande 200.

Le débit de liquide de traitement L sortant de la cuve 101 est par exemple déterminé, notamment par calculs, par l'unité de commande 200 au moyen de la vanne de régulation 106.

Le circuit d'alimentation 103 peut encore comprendre un capteur de pression 107 monté en aval de la vanne de régulation 106. Le capteur de pression 107 est relié à l'unité de commande 200 à laquelle il communique la pression du liquide de traitement L circulant dans le circuit d'alimentation 103, en aval de la vanne de régulation 106. Le capteur de pression 107 permet ainsi à l'unité de commande 200 de piloter la vanne de régulation 106 en fonction de la pression du liquide de traitement L circulant dans le circuit d'alimentation 103, en aval de la vanne de régulation 106.

Le ou chaque dispositif de pulvérisation 102 comprend aussi une pluralité de buses de pulvérisation 108 par l'intermédiaire desquelles du liquide de traitement L est pulvérisé sur les végétaux à traiter du champ.

La première pompe 12 de l'ensemble récupérateur 10 peut être remplacée par tout mécanisme générateur de débit. En variante (non représente), le mécanisme générateur de débit 12 comprenant une boucle de circulation équipée d'un hydro-éjecteur portant l'orifice d'aspiration 15 et d'une pompe montée en amont ou en aval de l'hydro-éjecteur, l'hydro-éjecteur ou la pompe située en aval de l'hydro-éjecteur portant l'orifice de refoulement 17.

L'ensemble récupérateur 10 et le système de pulvérisation agricole 100 décrits ci-dessus sont particulièrement avantageux car ils permettent d'avoir une circulation continue de liquide de traitement L à travers la première pompe 12 quel que soit le niveau de liquide de traitement L dans le bac récupérateur 11, ce qui aide à l'amorçage de la première pompe 12 et permet d'éviter son désamorçage.

## Revendications

1. Ensemble récupérateur (10) pour un système de pulvérisation agricole comprenant une cuve (101) destiné à contenir un liquide de traitement (L) et au moins un dispositif de pulvérisation (102) destiné à pulvériser du liquide de traitement (L) provenant de la cuve (101) sur des végétaux à traiter dans un champ, l'ensemble récupérateur (10) comprenant :
- un bac récupérateur (11) destiné à récupérer du liquide de traitement (L) pulvérisé en surplus par le dispositif de pulvérisation (102) sur les végétaux à traiter,
- un mécanisme générateur de débit (12) comprenant un orifice d'aspiration (15) communiquant avec le bac récupérateur (11) via un circuit d'aspiration (16) et un orifice de refoulement (17) destiné à communiquer avec la cuve (101) via un circuit de refoulement (13), le mécanisme générateur de débit (12) étant en outre conçu pour aspirer le liquide de traitement (L) récupéré par le bac récupérateur (11) et pour le refouler vers le circuit de refoulement (13),
l'ensemble récupérateur (10) étant **caractérisé en ce qu'**il comprend un premier circuit de dérivation (18) communiquant d'une part avec l'orifice de refoulement (17) du mécanisme générateur de débit (12) via le circuit de refoulement (13) et d'autre part avec le bac récupérateur (11), le premier circuit de dérivation (18) étant en outre conçu pour renvoyer du liquide de traitement (L) provenant du mécanisme générateur de débit (12) vers le bac récupérateur (11), de manière à provoquer une circulation continue de liquide de traitement (L) à travers le mécanisme générateur de débit (12).

2. Ensemble récupérateur (10) selon la revendication 1, dans lequel le premier circuit de dérivation (18) est connecté au circuit de refoulement (13) au niveau d'un noeud (23), et dans lequel :
- le premier circuit de dérivation (18) comprend un limiteur de débit (19) conçu pour limiter le débit de liquide de traitement (L) circulant dans le premier circuit de dérivation (18) par rapport à celui circulant dans le circuit de refoulement (13), en aval du noeud (23),
ou
- le premier circuit de dérivation (18) est au moins en partie sous-dimensionné en section par rapport au circuit de refoulement (13), en aval du noeud (23).

3. Ensemble récupérateur (10) selon la revendication 2, dans lequel le limiteur de débit (19) est choisi parmi : une restriction calibrée, un limiteur de débit à pointeau ou une pastille à trou calibré.

4. Ensemble récupérateur (10) selon l'une des revendications 1 à 3, dans lequel le premier circuit de dérivation (18) est conçu pour évacuer de l'air aspiré par le mécanisme générateur de débit (12) avec le liquide de traitement (L) récupéré dans le bac récupérateur (11).

5. Ensemble récupérateur (10) selon la revendication 4, dans lequel le premier circuit de dérivation (18) comprend un orifice de dégazage (26), notamment situé en aval du limiteur de débit (19), afin d'évacuer l'air aspiré par le mécanisme générateur de débit (12).

6. Ensemble récupérateur (10) selon l'une des revendications 1 à 5, dans lequel le circuit de refoulement (13) comprend un clapet anti-retour (33) situé en aval d'un noeud (23) au niveau duquel le premier circuit de dérivation (18) est connecté au circuit de refoulement (13), le clapet anti-retour (33) étant conçu pour :
- autoriser la circulation du liquide de traitement (L) dans le circuit de refoulement (13), depuis le mécanisme générateur de débit (12) vers la cuve (101), lorsqu'une pression du fluide dans le circuit de refoulement (13), en aval du noeud (23) et en amont du clapet anti-retour (33), est supérieure à une pression seuil qui est au moins égale à une pression du fluide dans le circuit de refoulement (13), en aval du clapet anti-retour (33), et
- bloquer la circulation du liquide de traitement (L) dans le circuit de refoulement (13), lorsque la pression du fluide dans le circuit de refoulement (13), en aval du noeud (23) et en amont du clapet anti-retour (33), est inférieure ou égale à la pression seuil.

7. Ensemble récupérateur (10) selon la revendication 6, dans lequel :
- le circuit de refoulement (13) comprend une première conduite (34) s'étendant depuis l'orifice de refoulement (17) du mécanisme générateur de débit (12) jusqu'à un noeud (23) au niveau duquel le premier circuit de dérivation (18) est connecté au circuit de refoulement (13), et une deuxième conduite (35) s'étendant depuis le noeud (23) vers la cuve (101),
- la deuxième conduite (35) du circuit de refoulement (13) comprend une première portion de conduite (36) et une deuxième portion de conduite (37) connectée au noeud (23) et à la première portion de conduite (36),
- la première portion conduite (36) de la deuxième conduite (35) du circuit de refoulement (13) s'étend, d'amont en aval dans le sens de circulation du liquide de traitement (L), sensiblement verticalement vers le haut,
- la première portion conduite (36) de la deuxième conduite (35) du circuit de refoulement (13) est équipée du clapet anti-retour (33) qui est agencé plus vers le bas que vers le haut sur la première portion de conduite (36).

8. Ensemble récupérateur (10) selon l'une des revendications 1 à 7, dans lequel :
- le premier circuit de dérivation (18) comprend une première conduite (21) s'étendant sensiblement verticalement vers le haut depuis le circuit de refoulement (13), le cas échéant équipé du limiteur de débit (19), et une deuxième conduite (22) prolongeant la première conduite (21) vers le bac récupérateur (11),
- le circuit de refoulement (13) comprend une première conduite (34) s'étendant depuis l'orifice de refoulement (17) du mécanisme générateur de débit (12) jusqu'à un noeud (23) au niveau duquel le premier circuit de dérivation (18) est connecté au circuit de refoulement (13), et une deuxième conduite (35) s'étendant depuis le noeud (23) vers la cuve (101),
- la deuxième conduite (35) du circuit de refoulement (13) comprend une première portion de conduite (36) et une deuxième portion de conduite (37) connectée au noeud (23) et à la première portion de conduite (36), la deuxième portion de conduite (37) s'étendant depuis le noeud (23) sensiblement verticalement ou de manière inclinée vers le bas.

9. Ensemble récupérateur (10) selon l'une des revendications 1 à 8, comprenant un débitmètre (45) monté sur le circuit de refoulement (13), en aval d'un noeud (23) au niveau duquel le premier circuit de dérivation (18) est connecté au circuit de refoulement (13) et le cas échéant en aval du clapet anti-retour (33), et conçu pour mesurer un débit de fluide entrant dans la cuve (101).

10. Système de pulvérisation agricole (100) comprenant une cuve (101) destiné à contenir un liquide de traitement (L), au moins un dispositif de pulvérisation (102) conçu pour pulvériser du liquide de traitement (L) provenant de la cuve (101) sur des végétaux à traiter dans un champ et au moins un ensemble récupérateur (10) selon l'une des revendications 1 à 9.

11. Système de pulvérisation agricole (100) selon la revendication 10, dans lequel l'ensemble récupérateur (10) comprend un débitmètre (45) qui est monté sur le circuit de refoulement (13), en aval d'un noeud (23) au niveau duquel le premier circuit de dérivation (18) est connecté au circuit de refoulement (13) et le cas échéant en aval du clapet anti-retour (33), et qui est conçu pour mesurer un débit de fluide entrant dans la cuve (101), le système de pulvérisation agricole (100) comprenant en outre une unité de commande (200) reliée au débitmètre (45) et conçue pour déterminer, à partir du débit mesuré par le débitmètre (45) de fluide entrant dans la cuve (101), une autonomie du système de pulvérisation agricole (100) à un instant t.

## Patentansprüche

1. Rückgewinnungsanordnung (10) für ein landwirtschaftliches Spritzsystem, umfassend einen Tank (101), der bestimmt ist, eine Behandlungsflüssigkeit (L) zu enthalten, und mindestens eine Spritzvorrichtung (102), die bestimmt ist, Behandlungsflüssigkeit (L) aus dem Tank (101) auf zu behandelnde Pflanzen auf einem Feld zu spritzen, wobei die Rückgewinnungsanordnung (10) umfasst:
- einen Rückgewinnungsbehälter (11), der bestimmt ist, Behandlungsflüssigkeit (L) zurückzugewinnen, die von der Spritzvorrichtung (102) überschüssig auf die zu behandelnden Pflanzen gespritzt wurde,
- einen Durchflusserzeugungsmechanismus (12), der eine Ansaugöffnung (15) umfasst, die mit dem Rückgewinnungsbehälter (11) über einen Ansaugkreis (16) kommuniziert und eine Auslassöffnung (17), die bestimmt ist, mit dem Tank (101) über einen Auslasskreis (13) zu kommunizieren, wobei der Durchflusserzeugungsmechanismus (12) ferner ausgelegt ist, um die vom Rückgewinnungsbehälter (11) zurückgewonnene Behandlungsflüssigkeit (L) anzusaugen und sie zum Auslasskreis (13) zurückzufördern,
wobei die Rückgewinnungsanordnung (10) **dadurch gekennzeichnet ist, dass** sie einen ersten Umgehungskreis (18) umfasst, der zum einen mit der Auslassöffnung (17) des Durchflusserzeugungsmechanismus (12) über den Auslasskreis (13) kommuniziert und zum anderen mit dem Rückgewinnungsbehälter (11), wobei der erste Umgehungskreis (18) ferner ausgelegt ist, um vom Durchflusserzeugungsmechanismus (12) kommende Behandlungsflüssigkeit (L) zum Rückgewinnungsbehälter (11) zurückzuleiten, so dass eine kontinuierliche Zirkulation von Behandlungsflüssigkeit (L) durch den Durchflusserzeugungsmechanismus (12) erreicht wird.

2. Rückgewinnungsanordnung (10) nach Anspruch 1, wobei der erste Umgehungskreis (18) im Bereich eines Knotens (23) mit dem Auslasskreis (13) verbunden ist, und wobei:
- der erste Umgehungskreis (18) einen Durchflussbegrenzer (19) umfasst, der ausgelegt ist, um den Durchfluss von Behandlungsflüssigkeit (L), der im ersten Umgehungskreis (18) zirkuliert, im Verhältnis zu dem zu begrenzen, der im Auslasskreis (13) nach dem Knoten (23) zirkuliert,
oder
- der erste Umgehungskreis (18) mindestens teilweise im Hinblick auf den Querschnitt im Verhältnis zum Auslasskreis (13) nach dem Knoten (23) unterdimensioniert ist.

3. Rückgewinnungsanordnung (10) nach Anspruch 2, wobei der Durchflussbegrenzer (19) aus einer kalibrierten Verengung, einem Durchflussbegrenzer mit Nadel oder einer Scheibe mit kalibriertem Loch ausgewählt ist.

4. Rückgewinnungsanordnung (10) nach einem der Ansprüche 1 bis 3, wobei der erste Umgehungskreis (18) ausgelegt ist, um vom Durchflusserzeugungsmechanismus (12) angesaugte Luft mit der zurückgewonnenen Behandlungsflüssigkeit (L) in den Rückgewinnungsbehälter (11) abzuleiten.

5. Rückgewinnungsanordnung (10) nach Anspruch 4, wobei der erste Umgehungskreis (18) eine Luftausleitöffnung (26) umfasst, die sich insbesondere nach dem Durchflussbegrenzer (19) befindet, um die vom Durchflusserzeugungsmechanismus (12) angesaugte Luft abzuleiten.

6. Rückgewinnungsanordnung (10) nach einem der Ansprüche 1 bis 5, wobei der Auslasskreis (13) ein Rückschlagventil (33) umfasst, das sich nach einem Knoten (23) befindet, in dessen Bereich der erste Umgehungskreis (18) mit dem Auslasskreis (13) verbunden ist, wobei das Rückschlagventil (33) ausgelegt ist, um:
- die Zirkulation der Behandlungsflüssigkeit (L) im Auslasskreis (13) ab dem Durchflusserzeugungsmechanismus (12) zum Tank (101) zu gestatten, wenn ein Druck des Fluids im Auslasskreis (13) nach dem Knoten (23) und vor dem Rückschlagventil (33) höher als ein Schwellendruck ist, der mindestens gleich einem Druck des Fluids im Auslasskreis (13) nach dem Rückschlagventil (33) ist, und
- die Zirkulation der Behandlungsflüssigkeit (L) im Auslasskreis (13) zu blockieren, wenn der Druck des Fluids im Auslasskreis (13) nach dem Knoten (23) und vor dem Rückschlagventil (33) niedriger oder gleich dem Schwellendruck ist.

7. Rückgewinnungsanordnung (10) nach Anspruch 6, wobei:
- der Auslasskreis (13) einen ersten Kanal (34) umfasst, der sich ab der Auslassöffnung (17) des Durchflusserzeugungsmechanismus (12) bis zu einem Knoten (23) erstreckt, in dessen Bereich der erste Umgehungskreis (18) mit dem Auslasskreis (13) verbunden ist, und einen zweiten Kanal (35), der sich ab dem Knoten (23) zum Tank (101) erstreckt,
- der zweite Kanal (35) des Auslasskreises (13) einen ersten Kanalabschnitt (36) und einen zweiten Kanalabschnitt (37) umfasst, der mit dem Knoten (23) und dem ersten Kanalabschnitt (36) verbunden ist,
- sich der erste Kanalabschnitt (36) des zweiten Kanals (35) des Auslasskreises (13) von vorn nach hinten in Zirkulationsrichtung der Behandlungsflüssigkeit (L) etwa vertikal nach oben erstreckt,
- der erste Kanalabschnitt (36) des zweiten Kanals (35) des Auslasskreises (13) mit dem Rückschlagventil (33) ausgestattet ist, das mehr nach unten als nach oben auf dem ersten Kanalabschnitt (36) eingerichtet ist.

8. Rückgewinnungsanordnung (10) nach einem der Ansprüche 1 bis 7, wobei:
- der erste Umgehungskreis (18) einen ersten Kanal (21) umfasst, der sich etwa vertikal nach oben ab dem Auslasskreis (13) erstreckt, gegebenenfalls mit einem Durchflussbegrenzer (19) ausgestattet, und einen zweiten Kanal (22), der den ersten Kanal (21) zum Rückgewinnungsbehälter (11) verlängert,
- der Auslasskreis (13) einen ersten Kanal (34) umfasst, der sich ab der Auslassöffnung (17) des Durchflusserzeugungsmechanismus (12) bis zu einem Knoten (23) erstreckt, in dessen Bereich der erste Umgehungskreis (18) mit dem Auslasskreis (13) verbunden ist, und einen zweiten Kanal (35), der sich ab dem Knoten (23) zum Tank (101) erstreckt,
- der zweite Kanal (35) des Auslasskreises (13) einen ersten Kanalabschnitt (36) und einen zweiten Kanalabschnitt (37) umfasst, der mit dem Knoten (23) und dem ersten Kanalabschnitt (36) verbunden ist, wobei sich der zweite Kanalabschnitt (37) ab dem Knoten (23) etwa vertikal oder schräg nach unten erstreckt.

9. Rückgewinnungsanordnung (10) nach einem der Ansprüche 1 bis 8, umfassend einen Durchflussmesser (45), der auf dem Auslasskreis (13) nach einem Knoten (23) angebracht ist, in dessen Bereich der erste Umgehungskreis (18) mit dem Auslasskreis (13) verbunden ist und gegebenenfalls nach dem Rückschlagventil (33) und ausgelegt ist, um einen Durchfluss von in den Tank (101) eintretendem Fluid zu messen.

10. Landwirtschaftliches Spritzsystem (100), umfassend einen Tank (101), der bestimmt ist, eine Behandlungsflüssigkeit (L) zu enthalten, mindestens eine Spritzvorrichtung (102), die ausgelegt ist, um Behandlungsflüssigkeit (L) aus dem Tank (101) auf zu behandelnde Pflanzen auf einem Feld zu spritzen, und mindestens eine Rückgewinnungsanordnung (10) nach einem der Ansprüche 1 bis 9.

11. Landwirtschaftliches Spritzsystem (100) nach Anspruch 10, wobei die Rückgewinnungsanordnung (10) einen Durchflussmesser (45) umfasst, der auf dem Auslasskreis (13) nach einem Knoten (23) angebracht ist, in dessen Bereich der erste Umgehungskreis (18) mit dem Auslasskreis (13) verbunden ist und gegebenenfalls nach dem Rückschlagventil (33), und der ausgelegt ist, um einen Durchfluss von in den Tank (101) eintretendem Fluid zu messen, wobei das landwirtschaftliche Spritzsystem (100) ferner eine Steuereinheit (200) umfasst, die mit dem Durchflussmesser (45) verbunden und ausgelegt ist, um ausgehend von dem vom Durchflussmesser (45) gemessenen Durchfluss von in den Tank (101) eintretendem Fluid eine Autonomie des landwirtschaftlichen Spritzsystems (100) zu einem Moment t zu bestimmen.

## Claims

1. A recovery assembly (10) for an agricultural spraying system comprising a tank (101) intended to hold a treatment liquid (L) and at least one spraying device (102) intended to spray treatment liquid (L) from the tank (101) onto plants to be treated in a field, the recovery assembly (10) comprising:
- a recovery pan (11) intended to recover excess treatment liquid (L) sprayed by the spraying device (102) onto the plants to be treated,
- a flow generating mechanism (12) comprising a suction port (15) communicating with the recovery pan (11) via a suction circuit (16) and a discharge port (17) intended to communicate with the tank (101) via a discharge circuit (13), the flow generating mechanism (12) being further designed to suck the treatment liquid (L) recovered by the recovery pan (11) and to discharge it to the discharge circuit (13),
- the recovery assembly (10) being **characterised in that** it comprises a first by-pass circuit (18) communicating on the one hand with the discharge port (17) of the flow generating mechanism (12) via the discharge circuit (13) and on the other hand with the recovery pan (11), the first by-pass circuit (18) being further designed to return treatment liquid (L) from the flow generating mechanism (12) to the recovery pan (11), so as to cause a continuous circulation of treatment liquid (L) through the flow generating mechanism (12).

2. The recovery assembly (10) according to claim 1, wherein the first by-pass circuit (18) is connected to the discharge circuit (13) at a node (23), and wherein:
- the first by-pass circuit (18) comprises a flow limiter (19) designed to limit the flow of treatment liquid (L) circulating in the first by-pass circuit (18) with respect to that circulating in the discharge circuit (13), downstream of the node (23),
or
- the first by-pass circuit (18) is at least partly undersized in cross-section with respect to the discharge circuit (13), downstream of the node (23).

3. The recovery assembly (10) according to claim 2, wherein the flow limiter (19) is selected from: a calibrated restriction, a needle-type flow limiter, or a calibrated-hole pellet.

4. The recovery assembly (10) according to one of claims 1 to 3, wherein the first by-pass circuit (18) is designed to exhaust air sucked by the flow generating mechanism (12) with the treatment liquid (L) recovered in the recovery pan (11).

5. The recovery assembly (10) according to claim 4, wherein the first by-pass circuit (18) comprises a degassing port (26), in particular located downstream of the flow limiter (19), in order to exhaust the air sucked by the flow generating mechanism (12).

6. The recovery assembly (10) according to one of claims 1 to 5, wherein the discharge circuit (13) comprises a check valve (33) downstream of a node (23) at which the first by-pass circuit (18) is connected to the discharge circuit (13), the check valve (33) being designed to:
- allow circulation of the treatment liquid (L) in the discharge circuit (13), from the flow generating mechanism (12) to the tank (101), when a fluid pressure in the discharge circuit (13), downstream of the node (23) and upstream of the check valve (33), is greater than a threshold pressure which is at least equal to a fluid pressure in the discharge circuit (13), downstream of the check valve (33), and
- block circulation of the treatment liquid (L) in the discharge circuit (13), when the fluid pressure in the discharge circuit (13), downstream of the node (23) and upstream of the check valve (33), is less than or equal to the threshold pressure.

7. The recovery assembly (10) according to claim 6, wherein:
- the discharge circuit (13) comprises a first pipe (34) extending from the discharge port (17) of the flow generating mechanism (12) to a node (23) at which the first by-pass circuit (18) is connected to the discharge circuit (13), and a second pipe (35) extending from the node (23) to the tank (101),
- the second pipe (35) of the discharge circuit (13) comprises a first pipe portion (36) and a second pipe portion (37) connected to the node (23) and to the first pipe portion (36),
- the first pipe portion (36) of the second pipe (35) in the discharge circuit (13) extends, from upstream to downstream in the direction of circulation of the treatment liquid (L), substantially vertically upwardly,
- the first pipe portion (36) of the second pipe (35) of the discharge circuit (13) is fitted with the check valve (33) which is arranged more downwardly than upwardly on the first pipe portion (36).

8. The recovery assembly (10) according to one of claims 1 to 7, wherein:
- the first by-pass circuit (18) comprises a first pipe (21) extending substantially vertically upwardly from the discharge circuit (13), where applicable fitted with the flow limiter (19), and a second pipe (22) extending the first pipe (21) to the recovery pan (11),
- the discharge circuit (13) comprises a first pipe (34) extending from the discharge port (17) of the flow generating mechanism (12) to a node (23) at which the first by-pass circuit (18) is connected to the discharge circuit (13), and a second pipe (35) extending from the node (23) to the tank (101),
- the second pipe (35) of the discharge circuit (13) comprises a first pipe portion (36) and a second pipe portion (37) connected to the node (23) and to the first pipe portion (36), the second pipe portion (37) extending from the node (23) substantially vertically or downwardly tilted.

9. The recovery assembly (10) according to one of claims 1 to 8, comprising a flowmeter (45) mounted to the discharge circuit (13), downstream of a node (23) at which the first by-pass circuit (18) is connected to the discharge circuit (13) and, where applicable, downstream of the check valve (33), and designed to measure a flow of fluid entering the tank (101).

10. An agricultural spraying system (100) comprising a tank (101) intended to hold a treatment liquid (L), at least one spraying device (102) designed to spray treatment fluid (L) from the tank (101) onto plants to be treated in a field, and at least one recovery assembly (10) according to one of claims 1 to 9.

11. The agricultural spraying system (100) according to claim 10, wherein the recovery assembly (10) comprises a flowmeter (45) that is mounted to the discharge circuit (13), downstream of a node (23) at which the first by-pass circuit (18) is connected to the discharge circuit (13) and where applicable downstream of the check valve (33), and which is designed to measure a flow of fluid entering the tank (101), the agricultural spraying system (100) further comprising a control unit (200) connected to the flowmeter (45) and designed to determine, from the flow measured by the flowmeter (45) of fluid entering the tank (101), autonomy of the agricultural spraying system (100) at a time instant t.
